# EUROPÄISCHE PATENTSCHRIFT

(11) **EP 3 696 298 B1**
(45) Veröffentlichungstag und Bekanntmachung des Hinweises auf die Patenterteilung: **06.04.2022**
(21) Anmeldenummer: 19157761.8
(22) Anmeldetag: 18.02.2019
(51) Int. Cl.: C25B 1/04, C25B 9/75, C25B 9/77, C25B 15/08, H01M 8/0273

(54) **ELEKTROLYSEBLOCK UND ZELLRAHMEN HIERFÜR**
ELEKTROLYSIS BLOCK AND CELL FRAME FOR SAME
BLOC D'ÉLECTROLYSE ET CADRE POUR CELLULE CORRESPONDANT

(43) Veröffentlichungstag der Anmeldung: 19.08.2020
(73) Patentinhaber: Zentrum für Sonnenenergie- und Wasserstoff-Forschung Baden-Württemberg, 70563 Stuttgart (DE)
(72) Erfinder: Brinner, Andreas, 71277 Rutesheim (DE); Kindl, Verena, 70435 Stuttgart (DE); Steiert, Stefan, 70193 Stuttgart (DE); Hug, Wolfgang, 76133 Karlsruhe (DE); Möller, Ralf, 31241 Ilsede (DE)
(74) Vertreter: Patentanwälte Ruff, Wilhelm, Beier, Dauster & Partner mbB

(56) Entgegenhaltungen:
- EP-B1- 2 898 115
- CN-A- 101 847 724
- CN-U- 202 308 168
- DE-C- 869 941
- JP-A- 2013 173 995

## Beschreibung

Die Erfindung bezieht sich auf einen Zellrahmen für einen Elektrolyse- oder Brennstoffzellenblock, mit einer Aufnahmeöffnung, die zum wahlweisen Aufnehmen einer Elektrolyse- oder Brennstoffzellenmembran oder einer medienundurchlässigen Platte eingerichtet ist, einer Mehrzahl von Sammelkanalöffnungen, die zur Medienzuführung und Medienabführung durch den Zellrahmen hindurch eingerichtet sind, einer Verteilerkanalstruktur, die zur Medienzuführung von einer jeweiligen zuführenden Sammelkanalöffnung zu einem zugeordneten Halbraum angrenzend an die Aufnahmeöffnung und zur Medienabführung aus diesem Halbraum zu einer zugeordneten, abführenden Sammelkanalöffnung eingerichtet ist, und einer Abdichtstruktur, die zur Abdichtung des Zellrahmens nach außen und/oder der Aufnahmeöffnung und/oder der Sammelkanalöffnungen eingerichtet ist. Der Zellrahmen erstreckt sich im Wesentlichen plan mit einer Längsrichtung und einer Querrichtung, die in einer entsprechenden Zellrahmenebene liegen bzw. eine solche definieren, wobei vorliegend eine zur Zellrahmenebene senkrechte Richtung als Hochachsenrichtung bezeichnet wird. Der erwähnte Halbraum bildet in einer fertigen Elektrolysezelle den einen elektrolytisch aktiven Medienraum, in welchem mit dem über die zugehörige Sammelkanalöffnung zugeführten Eduktmedium eine Elektrolyse-Teilreaktion stattfindet und aus dem das dadurch entstehende Produktmedium über die zugehörige Sammelkanalöffnung abgeführt wird. Im Fall der Anwendung für Elektrolysezwecke bilden zwei Zellrahmen mit jeweils einem Halbraum eine vollständige Elektrolysezelle, in der, durch die Membran getrennt, die beiden Elektrolyse-Teilreaktionen parallel ablaufen und zwei Produktmedien erzeugen, z.B. im Falle der Wasserelektrolyse aus Wasser in einem kathodenseitigen Halbraum Wasserstoff-Gas und im anodischen Halbraum SauerstoffGas.

Die Erfindung bezieht sich zudem auf einen mit derartigen Zellrahmen aufgebauten Elektrolyseblock mit einem Blockstapelaufbau, bei dem die Zellrahmen aufeinanderfolgend gestapelt sind, was auch als Stack-Design bezeichnet wird. Eine zugehörige Stapelrichtung, entlang der die Zellrahmen im Blockstapelaufbau aufeinanderfolgen, ist folglich parallel zur Hochachsenrichtung der gestapelten Zellrahmen. Ein solcher Elektrolyseblock eignet sich z.B. zur alkalischen Wasserelektrolyse, drucklos oder mit einem Betriebsüberdruck. Der Blockstapelaufbau umfasst typisch eine Mehrzahl von gestapelten Zellrahmen zusammen mit Elektrolysemembranen und Separator- bzw. Bipolarplatten mit beidseits zugehörigen Anoden- bzw. Kathoden-Arbeitselektroden, z.B. zur Bildung von ca. 5 bis ca. 350 Elektrolyse-Zellen.

Bei einem Elektrolyseur mit diesem Stack-Design werden herkömmlich eine Vielzahl von unterschiedlichen Bauteilen stapelförmig aneinandergelegt und/oder miteinander verbunden, wie Zellmembranen, Bipolarplatten, Anoden- und Kathoden-Elektroden, Anoden-Zellrahmen, Kathoden-Zellrahmen, Stromübertrager-Strukturen, Kanaldichtungen und umlaufende Dichtungen sowie Befestigungs-Druckringe, vorzugsweise unter Verwendung von identischen, aufeinandergeschichteten Zellanordnungen bzw. Zelleinheiten. Die Bauteile werden lösbar mechanisch miteinander verbunden, ineinander gesteckt oder als Filterpressanordnung geschichtet, wobei die Schichtung endseitig durch druckfeste Endplatten vervollständigt wird, über welche die Anschlüsse für die flüssigen und/oder gasförmigen Elektrolysemedien, wie flüssige Elektrolyt-Eduktmedien und Produktgase, hergestellt werden. Die elektrischen Anschlüsse werden idealerweise isoliert von den Endplatten durch Durchgangsbohrungen in den Endplatten hindurch zur Kathode der ersten Zelle und Anode der letzten Zelle einer Stack-Anordnung hergestellt. Eine Kontaktierung über die Endplatten ist ebenfalls möglich. Die Endplatten und die Zellen werden typischerweise mit Zugankern und Federpaketen gleichmäßig mechanisch verspannt.

Diverse herkömmliche Elektrolyseblöcke bzw. elektrochemische Blockstapelaufbauten und deren Zellrahmen sind in den Patentschriften DE 869 941, US 4.124.478 und US 6.117.287, der Gebrauchsmusterschrift CN 202308168 U sowie den Offenlegungsschriften US 2010/0187102 A1, US 2002/0175072 A1, DE 27 29 640 A1, DE 102 59 386 A1, CN 101847724 A, JP 2013-173995 A und US 2010/0136455 A1 offenbart. Typischerweise sind bei diesen herkömmlichen Anordnungen jeweils eigene, eventuell baugleiche Zellrahmen für die Anodenelektroden einerseits und die Kathodenelektroden andererseits vorgesehen, zwischen denen die jeweilige Membran eingespannt gehalten wird, und/oder die Zellrahmen weisen beidseitig eine Verteilerkanalstruktur zur Medienzuführung bzw. Medienabführung und/oder beidseitig Abdichtstrukturen und/oder eine Verteilerkanalstruktur und eine Abdichtstruktur auf einer gleichen Zellrahmenseite auf.

Ein Zellrahmen der eingangs genannten Art und ein mit solchen Zellrahmen aufgebauter Elektrolyseblock sind in der Patentschrift EP 2 898 115 B1 offenbart. Der dortige Zellrahmen ist dafür eingerichtet, wahlweise eine Bipolarplatte nebst zugehörigen Arbeitselektroden einschließlich Stromübertragerstrukturen in einer umlaufenden Innenrand-Schlitzaufnahme aufnehmen und halten zu können, wobei zum Aufbau des Elektrolyseblocks abwechselnd ein Zellrahmen mit daran gehaltener Membran und ein Zellrahmen mit daran gehaltener Bipolarplatte aneinandergelegt werden. Für den Blockstapelaufbau des dortigen Elektrolyseblocks werden aufeinanderfolgende Zellrahmen alternierend gegeneinander in Umfangsrichtung verdreht angeordnet. Auch dieser herkömmliche Zellrahmen ist beidseitig mit einer jeweiligen Verteilerkanalstruktur in Form einer entsprechenden Nutkanalstruktur versehen, wobei der Zellrahmen aus einem Material mit Dichtungseigenschaften gebildet ist und an einer seiner beiden entgegengesetzten Hauptseiten mit Dichtungswülsten und an der anderen Hauptseite mit korrespondierenden Dichtungseinkerbungen versehen ist.

Der Erfindung liegt als technisches Problem die Bereitstellung eines Zellrahmens der eingangs genannten Art, der gegenüber dem oben erwähnten Stand der Technik insbesondere hinsichtlich Funktionalität und Fertigungsaufwand weiter verbessert ist, und eines aus derartigen Zellrahmen aufgebauten Elektrolyseblocks zugrunde.

Die Erfindung löst dieses Problem durch die Bereitstellung eines Zellrahmens mit den Merkmalen des Anspruchs 1 und eines Elektrolyseblocks mit den Merkmalen des Anspruchs 13.

Beim erfindungsgemäßen Zellrahmen ist die Verteilerkanalstruktur von einer nur an einer ersten Hauptseite des Zellrahmens gebildeten Nutkanalstruktur und einer Mehrzahl von Durchgangsbohrungen gebildet, die sich mit einer zu einer Zellrahmenebene parallelen Richtungskomponente zwischen der Nutkanalstruktur und dem zugeordneten Halbraum angrenzend an die Aufnahmeöffnung erstrecken. Mit dem Begriff Zellrahmenebene ist hierbei wie üblich und oben erwähnt eine Ebene gemeint, in der sich der vollständig oder jedenfalls im Wesentlichen plane Zellrahmen erstreckt. Die Abdichtstruktur ist nur auf einer der ersten Hauptseite entgegengesetzten zweiten Hauptseite des Zellrahmens ausgebildet.

Dies bedeutet, dass beim erfindungsgemäßen Zellrahmen die Nutkanalstruktur der Verteilerkanalstruktur einerseits und die Abdichtstruktur andererseits jeweils nur an einer der beiden Zellrahmen-Hauptseiten gebildet sind, und zwar die Nutkanalstruktur ausschließlich auf der einen Hauptseite und die Abdichtstruktur ausschließlich auf der anderen Hauptseite. Diese Zellrahmenstruktur hat mehrere prominente Vorteile.

So kann die Abdichtstruktur an der betreffenden Zellrahmen-Hauptseite unabhängig von der Nutkanalstruktur für die Verteilerkanalstruktur spezifisch auf ihre Abdichtfunktionalität hin ausgelegt werden, ohne dass das Problem von Kreuzungsbereichen der beiden Strukturen auftritt. Analog kann die Nutkanalstruktur auf der betreffenden Zellrahmen-Hauptseite ohne das Problem von Interferenzen mit der Abdichtstruktur spezifisch auf ihre Kanalfunktionalität zur Führung der beteiligten flüssigen und/oder gasförmigen Medien ausgelegt werden. Des Weiteren kann die räumliche Trennung von Abdichtstruktur auf der einen Zellrahmen-Hauptseite und der Nutkanalstruktur auf der anderen Zellrahmen-Hauptseite die Fertigung des Zellrahmens vereinfachen.

Als besonderer Vorteil schafft der erfindungsgemäße Zellrahmen eine gute Voraussetzung dafür, einen Elektrolyseblock in besonders einfacher Weise aus identisch mit einer in der Aufnahmeöffnung aufgenommenen Membran bestückten Zellrahmen aufzubauen. Die Bipolarplatten brauchen nicht an separaten Zellrahmen angeordnet werden, sondern können mit den beidseits zugehörigen Arbeitselektroden zwischen je zwei aufeinanderfolgenden Elektrolysemembranen angeordnet werden, z.B. durch zusätzliches Aufnehmen in den Aufnahmeöffnungen der Zellrahmen.

Zudem ist durch diese Aufteilung von Abdichtstruktur einerseits und medienführender Nutkanalstruktur andererseits eine klare Trennung zwischen Abdichtungssystem auf der einen Zellrahmen-Hauptseite und Kanalsystem für Medienzuführung, wie Laugenzufuhr im Fall einer alkalischen Wasserelektrolyse, und Medienabführung, wie Produktgasabführung, auf der anderen Zellrahmen-Hauptseite gegeben, wobei die Membran und optional zusätzlich die Bipolarplatte vorzugsweise von der Seite der Abdichtungsstruktur her von der dann auf dieser Seite ausgebildeten Aufnahmeöffnung aufgenommen wird. Die Aufnahmeöffnung kann z.B. durch eine flache Aufnahme-Ausfräsung des aus einem Kunststoffmaterial bestehenden Zellrahmens realisiert sein, in welcher die Membran aufgenommen und fixiert werden kann.

Das Vorhandensein der mehreren Durchgangsbohrungen erhöht die Funktionssicherheit jeder einzelnen Elektrolysezelle in einem Blockstapelaufbau eines Elektrolyseblocks, da die Funktionsfähigkeit auch dann noch gegeben ist, wenn ein Teil der Durchgangsbohrungen verengt oder ganz verstopft ist. Da sich die Durchgangsbohrungen mit einer zur Zellrahmenebene parallelen Richtungskomponente erstrecken, in vorteilhaften Ausführungen parallel zur Zellrahmenebene, um die Nutkanalstruktur mit dem zugeordneten Halbraum des Zellrahmens in Fluidverbindung zu bringen, können in einfacher Weise Kreuzungsprobleme mit der Abdichtstruktur vermieden werden.

Der Zellrahmen lässt sich in vorteilhaften Ausführungsformen derart ausbilden, dass sich die Zellrahmen für den Blockstapelaufbau eines Elektrolyseblocks plan aneinander stapeln lassen, so dass eine großflächige optimale Kraftübertragung der Verspannkräfte über einen großen Flächenanteil der Zellrahmen hinweg ermöglicht werden kann. Beispielsweise können die Zellrahmen mit einem Flächenanteil von über 50% oder über 60% oder mehr mit Berührkontakt gegeneinander anliegen. Zusatzbauteile zur Halterung der Membran bzw. der Bipolarplatte im bzw. am Zellrahmen sind nicht zwingend notwendig.

Der Zellrahmen kann mit geringem Fertigungsaufwand als ebenes Platten- bzw. Scheibenbauteil hergestellt werden, wobei zusätzlich lediglich die Durchgangsbohrungen zu bilden sind und Ausfräsungen bzw. Ausnehmungen für die Nutkanalstruktur und vorzugsweise auch für die Abdichtstruktur vorzusehen sind. Der Zellrahmen eignet sich zur Herstellung beispielsweise in einer Frästechnik oder einer Spritzgießtechnik, d.h. als Fräs- oder Spritzgussteil. Insbesondere kann der Zellrahmen aus einem gegen die Elektrolysebedingungen beständigen Thermoplast-Kunststoffmaterial bestehen, wie z.B. POM-C.

In einer Weiterbildung der Erfindung mündet die Nutkanalstruktur mit einem sammelkanalseitigen Abschnitt in die zugeordnete Sammelkanalöffnung, und die Durchgangsbohrungen münden in einen an den sammelkanalseitigen Abschnitt anschließenden, halbraumseitigen Abschnitt der Nutkanalstruktur. Dabei ist der halbraumseitige Abschnitt der Nutkanalstruktur symmetrisch zu einer Querachse des Zellrahmens und/oder symmetrisch zu einer Längsachse des Zellrahmens gebildet. Dies ist hinsichtlich Fertigungsaufwand und gleichmäßiger Medienzuführung und Medienabführung zu und von dem betreffenden Halbraum und damit der von diesem gebildeten Halbzelle einer zugehörigen Elektrolysezelle, z.B. in einem Elektrolyseblock, von Vorteil.

In einer Weiterbildung der Erfindung ist die Nutkanalstruktur mit einem mäanderförmigen Verlauf und/oder mit einem sich in Richtung zu den Durchgangsbohrungen hin verzweigenden Verlauf gebildet. Dies ist z.B. hinsichtlich optimiertem Faraday-Wirkungsgrad, flexibler Abstimmung ionischer Widerstände bzw. Strömungswiderstände und/oder minimalem Strömungswiderstand von Vorteil.

In einer Weiterbildung der Erfindung sind die Durchgangsbohrungen bezüglich einer zur Hochachse senkrechten Mittenebene des Zellrahmens zum zugeordneten Halbraum hin versetzt angeordnet, und/oder die Durchgangsbohrungen münden an einer Nutseitenwand der Nutkanalstruktur angrenzend an einen Nutgrund der Nutkanalstruktur in die Nutkanalstruktur. Dies trägt zu einer optimalen Medienführung bei und ist fertigungstechnisch vergleichsweise einfach realisierbar.

In einer Weiterbildung der Erfindung sind die Durchgangsbohrungen an einem zugeordneten Randseitenabschnitt des Halbraums gleichmäßig verteilt angeordnet. Dies trägt zu einer gleichmäßigen Medienzuführung und Medienabführung zu der bzw. aus der jeweiligen Elektrolysezelle bzw. Halbzelle bei, wozu passend die Nutkanalstruktur bevorzugt entlang der überwiegenden Länge der betreffenden Randseite des Halbraums bzw. des Zellrahmens verläuft.

In einer Weiterbildung der Erfindung ist die Aufnahmeöffnung von einer einseitigen Aufnahmenut im Zellrahmen gebildet. Dadurch kann wahlweise die Membran oder die Bipolarplatte in dieser Nut des Zellrahmens aufgenommen werden. Diese Realisierung der Erfindung ermöglicht bei Bedarf eine sehr einfache Anpassung des Zellrahmens an eine variierende Dicke der Kombination von Membran und Bipolarplatte, indem die Aufnahmenut mit entsprechend variabler Nuttiefe gebildet wird. Weitere Konzeptänderungen sind dann für diese Anpassung nicht erforderlich.

In einer Weiterbildung der Erfindung ist die Abdichtstruktur durch mindestens eine Dichtnut im Zellrahmen und ein in die mindestens eine Dichtnut eingelegtes Dichtelement gebildet. Dies ermöglicht ein optimales Abdichtverhalten der Abdichtstruktur und ist mit relativ geringem Fertigungsaufwand realisierbar.

In einer Ausgestaltung der Erfindung beinhaltet die Abdichtstruktur eine um die Aufnahmeöffnung umlaufende Aufnahmeöffnungs-Dichtnut und einen darin eingelegten Aufnahmeöffnungs-Dichtring. Dies stellt eine vorteilhafte Abdichtung für die Aufnahmeöffnung dar.

In einer Ausgestaltung der Erfindung beinhaltet die Abdichtstruktur eine um eine zugeordnete Sammelkanalöffnung umlaufende Sammelkanal-Dichtnut und einen darin eingelegten Sammelkanal-Dichtring. Dies stellt eine günstige Realisierung für eine zuverlässige Abdichtung des Sammelkanals dar.

In einer Ausgestaltung der Erfindung beinhaltet die Abdichtstruktur eine benachbart zu einem Zellrahmenaußenrand umlaufende Zellrahmen-Dichtnut und einen darin eingelegten Zellrahmen-Dichtring. Dies ermöglicht in einer vorteilhaften Weise die Abdichtung des gesamten Zellrahmeninneren nach außen. In Kombination mit den anderen genannten Abdichtmaßnahmen kann somit durch die Abdichtstruktur ein mehrstufiges Abdichtungssystem für den Zellrahmen von innen nach außen bereitgestellt werden, was zu einer hohen Betriebssicherheit beiträgt. Die umlaufende Abdichtung der Aufnahmeöffnung bildet in diesem Fall eine innerste Abdichtung der Halbzellen untereinander, die Medien-Sammelkanäle sind gegeneinander in jedem Zellrahmenübergang durch die umlaufenden Sammelkanaldichtungen abgedichtet, und das Zellinnere und alle Sammelkanäle werden von der äußeren umlaufenden Zellrahmendichtung umschlossen.

Die Realisierung der Abdichtstruktur mit Hilfe der einen oder mehreren Dichtnuten ermöglicht zudem in einfacher Weise gegebenenfalls erforderliche Dichtungssystemänderungen, indem die Form und/oder der Verlauf der jeweiligen Dichtnut geeignet angepasst wird, ohne dass weitere Konzeptänderungen hierfür erforderlich sind.

In einer Ausgestaltung der Erfindung weist die Abdichtstruktur mindestens eine Dichtelement-Haltenase auf, die sich in die mindestens eine Dichtnut hinein erstreckt. Mit dieser einen oder mehreren Haltenasen kann das jeweils in die Dichtnut eingelegte Dichtelement in der Dichtnut festgehalten werden, so dass es beispielsweise während des Zusammenbaus eines Blockstapelaufbaus gegen Herausgelangen aus der Dichtnut gesichert ist.

In einer Weiterbildung der Erfindung ist der Zellrahmen rechteckförmig konfiguriert und weist in jedem seiner Viereckbereiche je eine Sammelkanalöffnung auf, wobei die Verteilerkanalstruktur auf zwei entgegengesetzten Seitenbereichen ausgebildet ist, z.B. auf den zwei entgegengesetzten Längsseiten oder den zwei entgegengesetzten Querseiten der Rechteckform des Zellrahmens. Dies stellt eine funktionell und fertigungstechnisch günstige Zellrahmenkonfiguration dar.

Der erfindungsgemäße Elektrolyseblock weist einen Blockstapelaufbau auf, der eine Mehrzahl von gegeneinander anliegend gestapelten, erfindungsgemäßen Zellrahmen, eine Mehrzahl von Elektrolysemembranen und eine Mehrzahl von Bipolarplatten umfasst. Die Zellrahmen sind alternierend um 180° um eine zur Zellrahmenebene senkrechte Hochachse gedreht gestapelt. Jeweils eine der Elektrolysemembranen ist in der Aufnahmeöffnung eines zugeordneten Zellrahmens aufgenommen. Jeweils eine der Bipolarplatten ist in der Aufnahmeöffnung eines zugeordneten Zellrahmens aufgenommen. Die Elektrolysemembranen und die Bipolarplatten sind alternierend angeordnet, und zugeordnete Arbeitselektroden sind dazwischen angeordnet. Dieser erfindungsgemäße Elektrolyseblock ist mit vergleichsweise geringem Aufwand herstellbar und besitzt eine hohe Betriebssicherheit.

In einer Weiterbildung der Erfindung ist an einer ersten Blockstirnseite des Blockstapelaufbaus eine Medienzuführungs-Anschlusskonfiguration angeordnet. An einer der ersten Blockstirnseite entgegengesetzten zweiten Blockstirnseite des Blockstapelaufbaus ist eine Medienabführungs-Anschlusskonfiguration angeordnet. Somit erfolgt bei dieser Konfiguration die Medienabführung aus dem Blockstapelaufbau nicht auf der gleichen Stirnseite wie die Medienzuführung, sondern auf der entgegengesetzten Stirnseite. Dies hat den Vorteil, dass kein Ladungsausgleich erforderlich ist und aufgrund dieses Blockdesigns elektrische Nebenschlussströme, die den Wirkungsgrad verringern, vergleichsweise gering gehalten werden können.

In einer Weiterbildung der Erfindung sind eine kathodische Elektrodenseite einer ersten Elektrolysezelle im Blockstapelaufbau und eine anodische Elektrodenseite einer letzten Elektrolysezelle im Blockstapelaufbau jeweils durch eine Isolierplatte und eine Isolierhülse elektrisch und medientechnisch von Endplatten des Blockstapelaufbaus getrennt, und elektrische Anschlüsse einer ersten Kathode und einer letzten Anode des Blockstapelaufbaus sind elektrisch isoliert durch die entsprechende Isolierplatte und Endplatte hindurchgeführt. Damit können vorteilhaft die elektrischen Anschlüsse, wie Plus- und Minuspol eines Gleichrichters, zu den beiden Endseiten des Blockstapelaufbaus herangeführt werden.

In einer Ausgestaltung der Erfindung beinhaltet der Elektrolyseblock eine den Blockstapelaufbau umgehende Medienumlenkleitung von der Medienzuführungs-Anschlusskonfiguration an der ersten Blockstirnseite zur zweiten Blockstirnseite oder umgekehrt von der Medienabführungs-Anschlusskonfiguration an der zweiten Blockstirnseite zur ersten Blockstirnseite. Dies ermöglicht die Zuführung und Abführung aller beteiligten flüssigen und/oder gasförmigen Medien an einer gleichen, einzigen Blockstirnseite, eine Zugänglichkeit des Blockstapelaufbaus an einer weiteren Seite ist für diesen Zweck dann nicht zwingend erforderlich.

Vorteilhafte Ausführungsformen der Erfindung sind in den Zeichnungen dargestellt. Diese und weitere vorteilhafte Ausführungsformen der Erfindung werden nachfolgend näher erläutert. Hierbei zeigen:
- Fig. 1: eine Draufsicht auf eine Abdichtseite eines Zellrahmens für einen Elektrolyse- oder Brennstoffzellenblock,
- Fig. 2: eine Draufsicht auf eine Verteilerseite des Zellrahmens von Fig. 1,
- Fig. 3: eine Schnittansicht längs einer Linie III-III in Fig. 2,
- Fig. 4: eine Schnittansicht längs einer Linie IV-IV in Fig. 2,
- Fig. 5: eine Detailansicht eines Bereichs V in Fig. 4,
- Fig. 6: eine Schnittansicht längs einer Linie VI-VI in Fig. 2,
- Fig. 7: eine Draufsicht auf eine Rückseite eines Endzellrahmens für einen Elektrolyse- oder Brennstoffzellenblock,
- Fig. 8: eine Schnittansicht längs einer Linie VIII-VIII in Fig. 7,
- Fig. 9: eine Draufsicht auf eine Vorderseite des Endzellrahmens von Fig. 7,
- Fig.10: eine Schnittansicht längs einer Linie X-X in Fig. 9,
- Fig. 11: eine schematische Schnittansicht eines Teils eines Elektrolyseblocks mit einem Blockstapelaufbau unter Verwendung von Zellrahmen nach Art der Fig. 1 bis 6 und Endplatten nach Art der Fig. 7 bis 10,
- Fig. 12: eine schematische Detailschnittansicht zweier gegeneinander liegender Zellrahmen im Blockstapelaufbau von Fig. 11 und
- Fig. 13: eine schematische Perspektivansicht eines fertiggestellten Elektrolyseblocks.

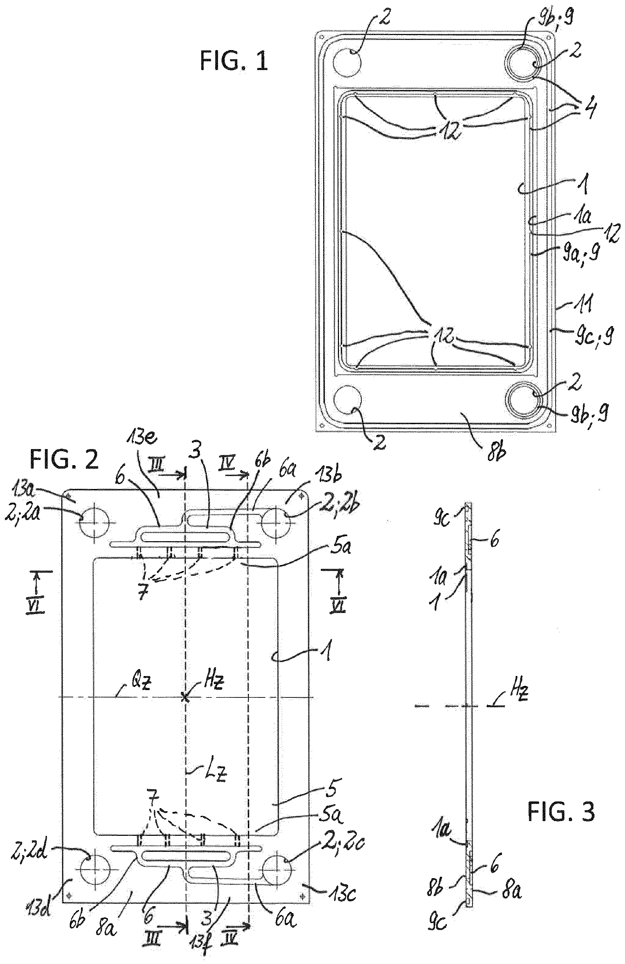

Der in den Fig. 1 bis 6 veranschaulichte Zellrahmen eignet sich zum Aufbau eines Blockstapels für einen Elektrolyse- oder Brennstoffzellenblock und beinhaltet eine Aufnahmeöffnung 1, die zum wahlweisen Aufnehmen einer Elektrolyse- oder Brennstoffzellenmembran oder einer medienundurchlässigen Platte, wie beispielsweise einer Bipolarplatte für einen Elektrolyse-Blockstapelaufbau, eingerichtet ist. Des Weiteren beinhaltet der Zellrahmen eine Mehrzahl von Sammelkanalöffnungen 2, die zur Medienzuführung und Medienabführung durch den Zellrahmen hindurch eingerichtet sind, sowie eine Verteilerkanalstruktur 3 und eine Abdichtstruktur 4.

Die Verteilerkanalstruktur 3 ist zur Medienzuführung von einer jeweiligen zuführenden Sammelkanalöffnung 2 zu einem zugeordneten Halbraum 5 angrenzend an die Aufnahmeöffnung 1 und zur Medienabführung aus diesem Halbraum 5 zu einer zugeordneten, abführenden Sammelkanalöffnung 2 eingerichtet. Die Verteilerkanalstruktur 3 ist von einer Nutkanalstruktur 6 und einer Mehrzahl von Durchgangsbohrungen 7 gebildet. Die Nutkanalstruktur 6 ist ausschließlich an einer ersten Hauptseite 8a des Zellrahmens gebildet, während die Abdichtstruktur 4 ausschließlich an einer der ersten Hauptseite 8a entgegengesetzten zweiten Hauptseite 8b des Zellrahmens gebildet ist. Die Durchgangsbohrungen 7 erstrecken sich mit einer zu einer Zellrahmenebene E_{Z} parallelen Richtungskomponente zwischen der Nutkanalstruktur 6 und dem zugeordneten Halbraum 5, vorzugsweise parallel zur Zellrahmenebene E_{Z} oder mit einer größeren Richtungskomponente parallel zur Zellrahmenebene E_{Z} als senkrecht zur Zellrahmenebene E_{Z}. Die erste Hauptseite 8a des Zellrahmens bildet somit eine Verteilerseite des Zellrahmens, während die zweite Hauptseite 8b eine Abdichtseite des Zellrahmens bildet.

In entsprechenden Ausführungsformen mündet wie beim gezeigten Ausführungsbeispiel die Nutkanalstruktur 6 mit einem sammelkanalseitigen Abschnitt 6a in die zugeordnete Sammelkanalöffnung 2, und die Durchgangsbohrungen 7 münden in einen an den sammelkanalseitigen Abschnitt 6a anschließenden, halbraumseitigen Abschnitt 6b der Nutkanalstruktur 6. Der halbraumseitige Abschnitt 6b der Nutkanalstruktur 6 ist symmetrisch zu einer Querachse Qz des Zellrahmens und/oder symmetrisch zu einer Längsachse L_{Z} des Zellrahmens gebildet. Dies trägt zur Erzielung einer gleichmäßigen Medienzuführung und Medienabführung zu und von dem betreffenden Halbraum bei.

In entsprechenden Ausführungsformen ist wie im gezeigten Beispiel die Nutkanalstruktur 6 mit einem mäanderförmigen Verlauf und/oder mit einem sich in Richtung zu den Durchgangsbohrungen 7 hin verzweigenden Verlauf gebildet. Dies kann z.B. bei Verwendung des Zellrahmens in einem Elektrolyseblock zur Optimierung des Faraday-Wirkungsgrades beitragen.

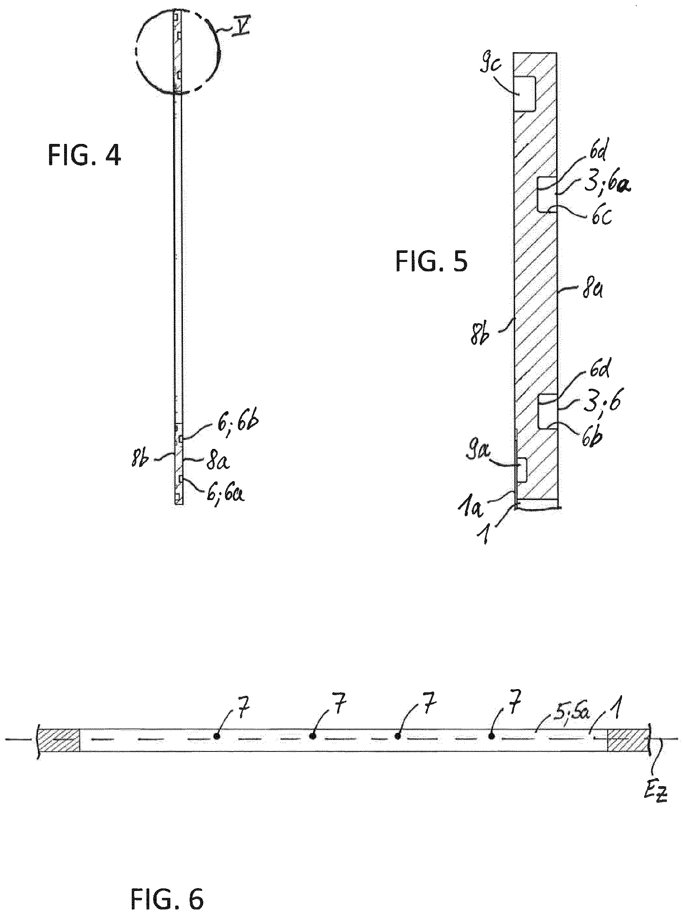

In entsprechenden Ausführungsformen sind wie im gezeigten Beispiel die Durchgangsbohrungen 7 bezüglich einer zu einer Hochachse H_{Z} des Zellrahmens senkrechten Mittenebene des Zellrahmens, die in Fig. 6 als die Zellrahmenebene E_{Z} gezeigt ist, zum zugeordneten Halbraum 5 hin versetzt angeordnet, wie aus Fig. 6 ersichtlich. Die Hochachse H_{Z} ist in dieser Definition somit senkrecht zur Querachse Q_{Z} und zur Längsachse L_{Z} des Zellrahmens und folglich parallel zu einer Blockstapelrichtung, wenn mehrere dieser Zellrahmen in einem Blockstapel aufeinander bzw. aneinander liegend gestapelt sind. Zusätzlich oder alternativ münden die Durchgangsbohrungen 7 wie im gezeigten Beispiel an einer Nutseitenwand 6c der Nutkanalstruktur 6 und angrenzend an einen Nutgrund 6d der Nutkanalstruktur 6 in die Nutkanalstruktur 6. Dies trägt zu einer optimalen Medienführung und dazu bei, störende Wechselwirkungen zwischen der Nutkanalstruktur 6 und der Abdichtstruktur 4 zu vermeiden.

Die Nuttiefe der Nutkanalstruktur 6 wird vorzugsweise auf höchstens die Hälfte der Rahmendicke des Zellrahmens begrenzt, und durch den Versatz gegenüber der Zellrahmen-Mittenebene können die Durchgangsbohrungen 7 relativ einfach als verhältnismäßig kurze Bohrungen an den gewünschten Bereichen in die Nutseitenwand 6c der Nutkanalstruktur 6 eingebracht werden.

In entsprechenden Ausführungen sind die Durchgangsbohrungen 7 wie im gezeigten Beispiel an einem zugeordneten Randseitenabschnitt 5a des Halbraums 5 verteilt angeordnet, vorzugsweise in einer gleichmäßigen Verteilung, d.h. mit im Wesentlichen gleichen gegenseitigen Abständen benachbarter Durchgangsbohrungen 7. Dies trägt zu einer gleichmäßigen Medienzuführung und Medienabführung bei.

In entsprechenden Ausführungsformen ist die Aufnahmeöffnung 1 wie im gezeigten Ausführungsbeispiel von einer einseitigen Aufnahmenut 1a im Zellrahmen gebildet. Vorzugsweise ist die Aufnahmenut 1a an der zweiten Hauptseite 8b, d.h. der Abdichtseite, des Zellrahmens in den Zellrahmen eingebracht. Durch die Realisierung der Aufnahmeöffnung 1 als in den Zellrahmen eingebrachte Aufnahmenut 1a lässt sich der Zellrahmen mittels entsprechender Wahl der Nuttiefe der Aufnahmenut 1a variabel an die jeweiligen Erfordernisse anpassen, insbesondere an die jeweilige Dicke des darin eingelegten Elements, wie einer Elektrolyse-Zellmembran oder einer Elektrolyse-Bipolarplatte. Wenn in Anwendung bei einem Elektrolyseblock die Membran und die Bipolarplatte unterschiedliche Dicken aufweisen, kann dies bei Bedarf durch einen Dickenausgleichsring kompensiert werden, der zusätzlich zum dünneren Element eingelegt wird, so dass dies zu einer Dicke gleich derjenigen des dickeren Elements führt, wodurch Zellrahmen mit identischer Aufnahmenuttiefe zum wahlweisen Aufnehmen der Membran bzw. der Bipolarplatte verwendet werden können und die Membran bzw. die Bipolarplatte jeweils bündig mit der zugordneten Hauptseite, z.B. der zweiten Hauptseite 8b, abschließt.

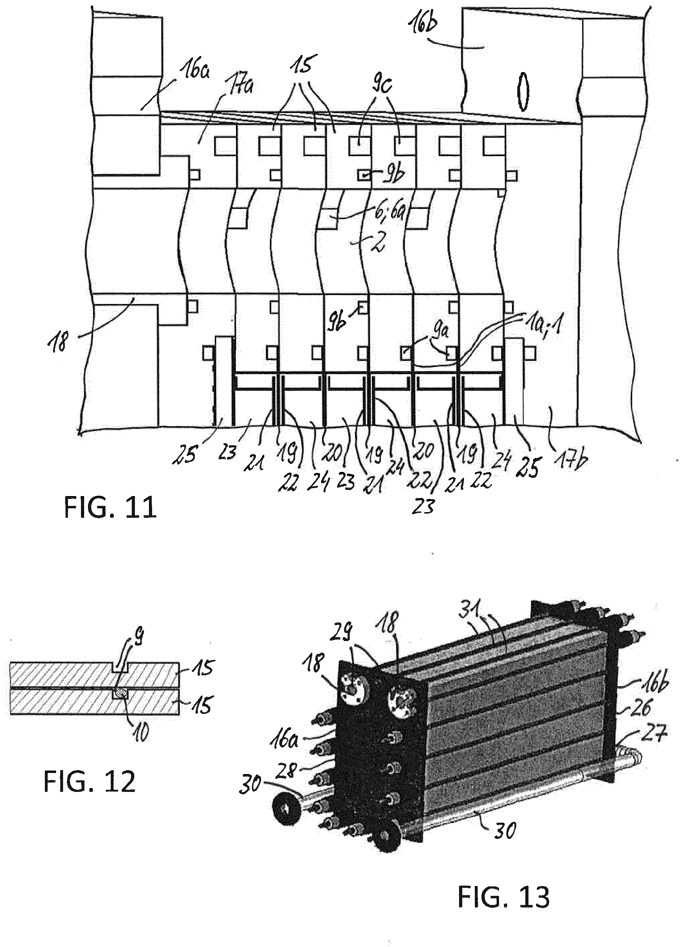

In entsprechenden Ausführungsformen ist die Abdichtstruktur 4 wie im gezeigten Ausführungsbeispiel durch mindestens eine Dichtnut 9 im Zellrahmen und ein in die mindestens eine Dichtnut 9 eingelegtes Dichtelement 10 gebildet. Der Einfachheit halber ist das Dichtelement 10 nur in einer von zwei in Fig. 12 zu erkennenden Dichtnuten 9 explizit gezeigt, während die übrigen Dichtnuten 9 ohne das jeweils eingelegte Dichtelement 10 gezeigt sind. Diese Abdichtstruktur ist mit relativ geringem Aufwand realisierbar und ermöglicht eine optimale Abdichtung in den vorliegend betrachteten Elektrolyse-/Brennstoffstellenanwendungen. Bei dem Dichtelement 10 handelt es sich vorzugsweise jeweils um eine Schnurdichtung bzw. einen O-Dichtring.

In entsprechenden Ausführungen beinhaltet die Abdichtstruktur 4 wie im gezeigten Beispiel eine um die Aufnahmeöffnung 1 des Zellrahmens umlaufende Aufnahmeöffnungs-Dichtnut 9a und einen darin eingelegten Aufnahmeöffnungs-Dichtring. Damit lässt sich die Aufnahmeöffnung 1 vorteilhaft einfach und ausreichend zuverlässig abdichten.

In entsprechenden Ausführungen beinhaltet die Abdichtstruktur 4 wie im gezeigten Beispiel eine um eine zugeordnete Sammelkanalöffnung 2 umlaufende Sammelkanal-Dichtnut 9b und einen darin eingelegten Sammelkanal-Dichtring. Damit lässt sich die jeweilige Sammelkanalöffnung 2 mit vorteilhaft geringem Aufwand zuverlässig abdichten.

In entsprechenden Ausführungen beinhaltet die Abdichtstruktur 4 wie im gezeigten Beispiel eine benachbart zu einem Zellrahmenaußenrand 11 umlaufende Zellrahmen-Dichtnut 9c und einen darin eingelegten Zellrahmen-Dichtring. Damit lässt sich in einfacher Weise das Zellrahmeninnere zuverlässig nach außen abdichten.

In entsprechenden Ausführungsformen weist die Abdichtstruktur 4 wie im gezeigten Beispiel mindestens eine Dichtelement-Haltenase 12 auf, die sich in die mindestens eine Dichtnut 9 hinein erstreckt. Mit der Haltenase 12 kann das in die Dichtnut 9 eingelegte Dichtelement 10 festgehalten werden, wodurch beim Zusammenbau eines Blockstapelaufbaus aus einzelnen bestückten Zellrahmen vermieden wird, dass ein in eine Dichtnut 9 eingelegtes Dichtelement 10 unbeabsichtigt aus der Dichtnut 9 herausgelangt, bevor die Zellrahmen gegeneinander zur Anlage kommen und dadurch das Herausgelangen der Dichtelemente 10 aus den Dichtnuten 9 verhindert wird.

In entsprechenden Ausführungsformen ist der Zellrahmen wie beim gezeigten Ausführungsbeispiel rechteckförmig und von plattenförmig planer Gestalt, wobei er in jedem seiner vier Eckbereiche 13a, 13b, 13c, 13d je eine Sammelkanalöffnung 2a, 2b, 2c, 2d aufweist und die Verteilerkanalstruktur 6 auf zwei entgegengesetzten Seitenbereichen 13e, 13f ausgebildet ist. Im gezeigten Beispiel sind dies die beiden entgegengesetzten Querseitenbereiche des Zellrahmens, in alternativen Ausführungen sind es die beiden entgegengesetzten Längsseitenbereiche. In entsprechenden alternativen Ausführungen besitzt der Zellrahmen eine nicht-rechteckförmige Gestalt, z.B. eine kreisrunde Scheibenform, eine ovale Form oder eine polygonale Form mit weniger oder mehr als vier Ecken.

Der gezeigte Zellrahmen kann mit geringem Fertigungsaufwand vollständig in Frästechnik oder Spritzgießtechnik hergestellt werden. Dies betrifft insbesondere auch die Ausbildung der erwähnten Nuten, wie die Aufnahmenut 1a, die Nutkanalstruktur 6 und die Abdichtnuten 9. Bei Verwendung einer Frästechnik können die Durchgangsbohrungen 7 als einfache, geradlinige Bohrungen in den gefrästen Zellrahmen eingebracht werden. Bei Verwendung einer Spritzgießtechnik können die Durchgangsbohrungen 7 mittels zurückziehbarer Formstifte offengehalten werden, die vor Entnahme des gegossenen Zellrahmens aus einer zugehörigen Spritzgussform aus den Bohrungen in die Gießform zurückgezogen werden.

Im vorliegenden Ausführungsbeispiel sind jeweils zwei der vier in den Eckbereichen 13a bis 13d vorgesehenen Sammelkanalöffnungen 2a bis 2d mit zugehörigen Abdichtnuten 9b versehen. Dies korrespondiert dann mit einem gedrehten gegeneinander Anlegen der in einem Blockstapelaufbau eines Elektrolyseblocks gestapelten Zellrahmen.

Von den vier Sammelkanalöffnungen 2a bis 2d gehören jeweils die z.B. in Fig. 2 linksseitigen beiden Sammelkanalöffnungen 2a und 2d bzw. rechtsseitigen beiden Sammelkanalöffnungen 2b, 2c verfahrenstechnisch zueinander, beispielsweise kann für einen Elektrolyseblock zur alkalischen Wasserelektrolyse die in Fig. 2 rechte Rahmenseite als Wasserstoffseite und die in Fig. 2 linke Rahmenseite als Sauerstoffseite festgelegt werden. Wenn in Gebrauchslage des Blocks die Zellrahmen wie gezeigt mit in vertikaler Richtung weisender Längsachse L_{Z} angeordnet sind, fungieren die beiden unteren Sammelkanalöffnungen 2c, 2d zur Bildung der flüssigkeitszuführenden Sammelkanäle und die beiden oberen Sammelkanalöffnungen 2a, 2b zur Bildung der produktgasabführenden Sammelkanäle. Das heißt die in Fig. 2 untere rechte Sammelkanalöffnung 2c dient dann zur Bildung des Sammelkanals für die katalytische Elektrolytzufuhr auf der Wasserstoffseite der Elektrolysezelle, und die rechte obere Sammelkanalöffnung 2b dient zur Bildung des Sammelkanals für die Gasabfuhr des im Zellinneren produzierten Wasserstoffgases, welches das Zellinnere zusammen mit der Laugen-Wasser-Flüssigkeit als Zweiphasen-Gemisch verlässt. Die beiden in Fig. 2 linken Sammelkanalöffnungen 2a, 2d für die Anodenseite einer Elektrolysezelle sind reine Durchgangsbohrungen ohne Verbindung zur kathodischen Seite der Elektrolysezelle. Durch um 180° um die Hochachse H_{z} verdrehtes Aufeinanderlegen eines zweiten, identischen Zellrahmens auf den Zellrahmen in der Position von Fig. 2 wird dann eine vollständige Elektrolysezelle gebildet. Dabei wird der eine Zellrahmen mit seiner Abdichtseite, d.h. seiner zweiten Hauptseite 8b, gegen die Verteilerkanalseite, d.h. die erste Hauptseite 8a, des anderen Zellrahmens angelegt.

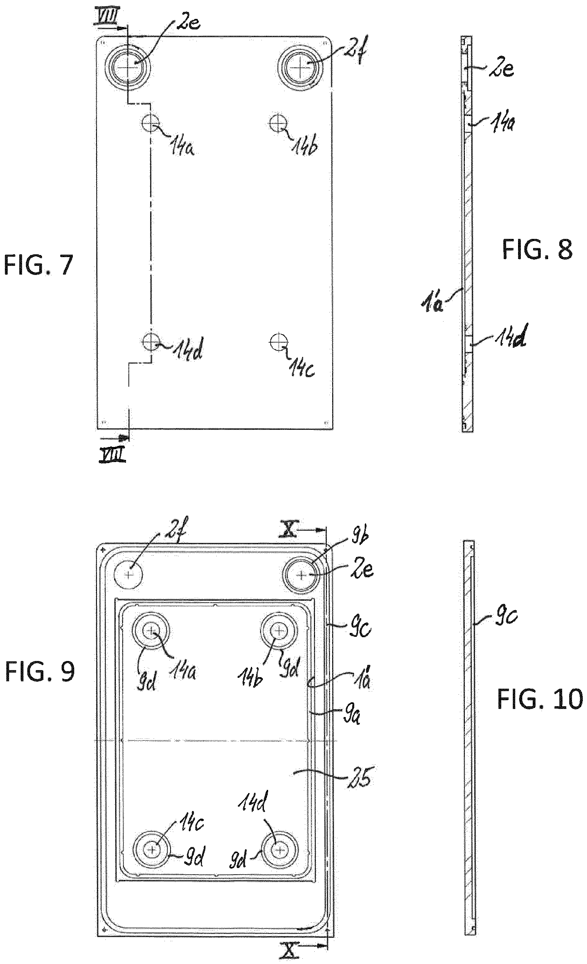

Die Fig. 7 bis 10 veranschaulichen einen Endzellrahmen, wie er für einen Blockstapelaufbau eines Elektrolyseblocks geeignet ist, der aus Zellrahmen gemäß den Fig. 1 bis 6 aufgebaut ist. Der Endzellrahmen ist formgleich zum Zellrahmen, d.h. beispielsweise rechteckförmig mit gleichen Längs- und Querabmessungen, und auch im Übrigen dem Zellrahmen ähnlich, was seine Fertigung günstig macht. Dies betrifft z.B. eine analoge Abdichtstruktur mit den entsprechenden Dichtnuten 9a, 9b, 9c, die hier wiederum alle auf einer Hauptseite liegen können. Er weist eine Aufnahmeöffnung 1'a analog der Zellrahmen-Aufnahmeöffnung 1a auf, wobei die Aufnahmeöffnung 1'a hier der Aufnahme einer Isolierplatte 25 dient, die vier Durchgangsbohrungen 14a, 14b, 14c, 14d für elektrische Anschlüsse aufweist. Die Verteilerkanalstruktur 6 entfällt, und es genügen zwei Sammelkanalöffnungen 2e, 2f. Die Isolierplatte 25 ist z.B. aus dem gleichen Material wie der Zellrahmen, beispielsweise einem POM-C-Kunststoffmaterial, gebildet. Auch die Abdichtstruktur mit den Dichtnuten 9 lässt sich entsprechend für die Endplatte übernehmen, insbesondere hinsichtlich der Sammelkanal-Dichtnuten 9b, der Aufnahmeöffnungs-Dichtnut 9a und der randseitig umlaufenden Dichtnut 9c. Zusätzlich kann wie gezeigt um jede elektrische Anschluss-Durchführungsbohrung 14a bis 14d eine umlaufende Dichtnut 9d eingebracht sein. Die Dichtnuten 9 können, brauchen aber nicht sämtlich auf einer der beiden Hauptseiten des Endzellrahmens vorgesehen sein.

Fig. 11 veranschaulicht an einem hier interessierenden, repräsentativen Ausschnitt einen Elektrolyseblock mit einem Blockstapelaufbau, der eine Mehrzahl von Zellrahmen 15 des oben zu den Fig. 1 bis 6 erläuterten Typs, eine Mehrzahl von Elektrolysemembranen 19 und eine Mehrzahl von Bipolarplatten 20 umfasst, wobei die aneinanderliegend gestapelten Zellrahmen 15 alternierend jeweils eine Elektrolysemembran 19 und eine Bipolarplatte 20 in ihrer Aufnahmeöffnung 1a aufnehmen. Die Zellrahmen 15 sind alternierend um 180° um ihre zur Zellrahmenebene E_{z} senkrechte Hochachse H_{Z} gedreht gestapelt. Jede Bipolarplatte 17 ist mit beidseits zugehörigen Arbeitselektroden zwischen je zwei aufeinanderfolgenden Elektrolysemembranen 19 angeordnet. Dadurch sind zwischen je einer Membran 19 und einer Bipolarplatte 20 zugehörige Kathoden- bzw. Anoden-Arbeitselektroden 21, 22 in den von den betreffenden Halbräumen der Zellrahmen 15 bzw. Elektrolysezellen gebildeten Kathodenräumen 23 bzw. Anodenräumen 24 angeordnet. Dazu gehören wie üblich geeignete Elektrodenstrukturen z.B. in Form von Lochblechstrukturen, und Stromübertragerstrukturen. Konkret ist in Fig. 11 stellvertretend für in der Praxis größere Aufbauten mit einer größeren Anzahl von Zellrahmen und mit deren Hilfe gebildeten Elektrolysezellen ein Aufbau mit sechs Zellrahmen 15 zur Bildung von drei Elektrolysezellen gezeigt. Ein in der Praxis verwendeter Bockstapelaufbau umfasst typischerweise 5 bis 350 Elektrolysezellen und mithin 10 bis 700 Zellrahmen.

Wenn die Zellrahmen 15 im Blockstapelaufbau gegeneinander anliegen, vorzugsweise in einem wie üblich gegeneinander in der zur Zellrahmen-Hochachse H_{z} parallelen Stapelrichtung verspannten bzw. verpressten Zustand, werden die in die Dichtnuten 9 eingelegten Dichtelemente 10, z.B. in Form von O-Ringen bzw. Schnurdichtungen, in der zugehörigen Dichtnut 9 abgeplattet, wie in Fig. 12 veranschaulicht, und dadurch gegen den Nutgrund, d.h. den Nutboden, der Dichtnut 9 angedrückt. Zusätzlich können die Dichtelemente 10 aufgrund eines gewissen Innendrucks, der üblicherweise im Blockstapel herrscht und in der Darstellung von Fig. 12 von links nach rechts wirkend angenommen ist, radial nach außen gegen die angrenzende Seitenwand der Dichtnut 9 gedrückt werden. Diese Effekte tragen zu einer hohen Abdichtzuverlässigkeit der Abdichtstruktur 4 bei.

Der Blockstapelaufbau schließt stapelendseitig mit je einer Endplatte 16a, 16b eines herkömmlichen, typischerweise metallischen Typs ab, an der in einer üblichen Weise die elektrischen Anschlüsse vorgesehen sind. Zur Isolation ist zwischen den die Elektrolysezellen bildenden Aufbau mit den Zellrahmen 15 und die jeweilige Endplatte 16a, 16b ein Endzellrahmen 17a, 17b des in den Fig. 7 bis 10 gezeigten Typs mit der jeweils aufgenommenen Isolierplatte 25 eingefügt. Die beiden Endzellrahmen 17a, 17b mit den Isolierplatten 25 sorgen zusammen mit Isolierhülsen 18, die jeweils durch eine der Endplatten 16a, 16b hindurchgeführt sind, für einen elektrisch und medientechnisch gegenüber den Endplatten 16a, 16b trennenden Anschluss der von den Sammelkanalöffnungen 2 der Zellrahmen 15 und der beiden Endzellrahmen 17a, 17b gebildeten Sammelkanäle nach außen. Mit anderen Worten sind dadurch eine kathodische Elektrodenseite einer ersten Elektrolysezelle im Blockstapelaufbau und eine anodische Elektrodenseite einer letzten Elektrolysezelle im Blockstapelaufbau elektrisch und medientechnisch von Endplatten 16a, 16b des Blockstapelaufbaus getrennt. Ebenso sind elektrische Anschlüsse einer ersten Kathode und einer letzten Anode des Blockstapelaufbaus elektrisch isoliert durch die entsprechende Isolierplatte und die entsprechende Endplatte hindurchgeführt.

Fig. 13 veranschaulicht einen entsprechend Fig. 11 aufgebauten Elektrolyseblock, der an einer ersten Blockstirnseite 26 des Blockstapelaufbaus, z.B. der durch die Endplatte 16b gebildeten Stirnseite, eine Medienzuführungs-Anschlusskonfiguration 27 und an einer der ersten entgegengesetzten zweiten Blockstirnseite 28 des Blockstapelaufbaus z.B. der durch die Endplatte 16a gebildeten Stirnseite, eine Medienabführungs-Anschlusskonfiguration 29 besitzt. Die jeweilige Anschlusskonfiguration 27, 29 umfasst insbesondere auch die zugehörigen Isolierhülsen 18. Der Blockstapelaufbau ist wie üblich z.B. mittels an den Endplatten angreifender Zuganker 31 verpresst bzw. verspannt.

Der so aufgebaute Elektrolyseblock ermöglicht somit vorteilhaft das Zuführen der flüssigen Einsatzmedien und das Herausführen der produktgashaltigen Medien an den beiden entgegengesetzten Blockstirnseiten 26, 28. Dies vermeidet elektrische Kurz-/Nebenschlussprobleme, wie sie beispielsweise auftreten können, wenn die produktgashaltigen Medien in den zugehörigen Sammelkanälen im Inneren des Blockstapels zurückgeführt werden. Da der Stoff- bzw. Medienstrom an den Stirnenden des Blockstapelaufbaus einschließlich der Endplatten 16a, 16b elektrisch isoliert vorbeigeführt bzw. durchgeführt wird, ist kein Ladungsausgleich erforderlich. Durch die Verwendung des speziellen Designs und von Kunststoffmaterial für die Zellrahmen 15 lässt sich in einfacher Weise eine elektrische Isolierung und damit Spannungsfreiheit der Endplatten 16a, 16b erreichen. Wenn gewünscht ist, dass die Medienzuführung und die Medienabführung an einer gleichen Blockseite erfolgen, kann jeweils eine den Blockstapelaufbau umgehende Medienumlenkleitung 30 von der Medienzuführungs-Anschlusskonfiguration 27 an der ersten Blockstirnseite zur zweiten Blockstirnseite 28, wie im gezeigten Beispiel von Fig. 13, oder von der Medienabführungs-Anschlusskonfiguration 29 zur ersten Blockstirnseite 26 vorgesehen ist.

Wie die gezeigten und weiteren oben erwähnten Ausführungsbeispiele deutlich machen, stellt die Erfindung einen vorteilhaft einfach zu fertigenden und funktionell vorteilhaften Zellrahmen sowie einen solche Zellrahmen verendenden Elektrolyseblock zur Verfügung. Die Zellrahmen können in analoger Weise auch in Brennstoffzellenstapeln für Brennstoffzellenanwendungen zum Einsatz kommen.

## Patentansprüche

1. Zellrahmen (15) für einen Elektrolyse- oder Brennstoffzellenblock, mit
- einer Aufnahmeöffnung (1), die zum wahlweisen Aufnehmen einer Elektrolyse- oder Brennstoffzellenmembran oder einer medienundurchlässigen Platte eingerichtet ist,
- einer Mehrzahl von Sammelkanalöffnungen (2), die zur Medienzuführung und Medienabführung durch den Zellrahmen (15) hindurch eingerichtet sind,
- einer Verteilerkanalstruktur (3), die zur Medienzuführung von einer jeweiligen zuführenden Sammelkanalöffnung (2) zu einem zugeordneten Halbraum (5) angrenzend an die Aufnahmeöffnung und zur Medienabführung aus diesem Halbraum (5) zu einer zugeordneten, abführenden Sammelkanalöffnung (2) eingerichtet ist, und
- einer Abdichtstruktur (4), die zur Abdichtung des Zellrahmens (15) nach außen und/oder der Aufnahmeöffnung (1) und/oder der Sammelkanalöffnungen (2) eingerichtet ist,
**dadurch gekennzeichnet, dass**
- die Verteilerkanalstruktur (3) von einer nur an einer ersten Hauptseite (8a) des Zellrahmens (15) gebildeten Nutkanalstruktur (6) und einer Mehrzahl von Durchgangsbohrungen (7) gebildet ist, die sich mit einer zu einer Zellrahmenebene (Ez) parallelen Richtungskomponente zwischen der Nutkanalstruktur (6) und dem zugeordneten Halbraum (5) erstrecken und
- die Abdichtstruktur (4) nur auf einer der ersten Hauptseite (8a) entgegengesetzten zweiten Hauptseite (8b) des Zellrahmens (15) gebildet ist.

2. Zellrahmen (15) nach Anspruch 1, weiter **dadurch gekennzeichnet, dass** die Nutkanalstruktur (6) mit einem sammelkanalseitigen Abschnitt (6a) in die zugeordnete Sammelkanalöffnung (2) mündet und die Durchgangsbohrungen (7) in einen an den sammelkanalseitigen Abschnitt (6a) anschließenden, halbraumseitigen Abschnitt (6b) der Nutkanalstruktur (6) münden, wobei der halbraumseitige Abschnitt (6b) der Nutkanalstruktur (6) symmetrisch zu einer Querachse (Qz) des Zellrahmens (15) und/oder symmetrisch zu einer Längsachse (Lz) des Zellrahmens (15) gebildet ist.

3. Zellrahmen (15) nach Anspruch 1 oder 2, weiter **dadurch gekennzeichnet, dass** die Nutkanalstruktur (6) mit einem mäanderförmigen Verlauf und/oder mit einem sich in Richtung zu den Durchgangsbohrungen (7) hin verzweigenden Verlauf gebildet ist.

4. Zellrahmen (15) nach einem der Ansprüche 1 bis 3, weiter **dadurch gekennzeichnet, dass** die Durchgangsbohrungen (7) bezüglich einer zu einer Hochachse (Hz) des Zellrahmens (15) senkrechten Mittenebene des Zellrahmens (15) zum zugeordneten Halbraum (5) hin versetzt angeordnet sind und/oder an einer Nutseitenwand (6c) der Nutkanalstruktur (6) und angrenzend an einen Nutgrund (6d) der Nutkanalstruktur (6) in die Nutkanalstruktur (6) münden.

5. Zellrahmen (15) nach einem der Ansprüche 1 bis 4, weiter **dadurch gekennzeichnet, dass** die Durchgangsbohrungen (7) an einem zugeordneten Randseitenabschnitt des Halbraums (5) gleichmäßig verteilt angeordnet sind.

6. Zellrahmen (15) nach einem der Ansprüche 1 bis 5, weiter **dadurch gekennzeichnet, dass** die Aufnahmeöffnung (1) von einer einseitigen Aufnahmenut (1a) im Zellrahmen (15) gebildet ist.

7. Zellrahmen (15) nach einem der Ansprüche 1 bis 6, weiter **dadurch gekennzeichnet, dass** die Abdichtstruktur (4) durch mindestens eine Dichtnut (9) im Zellrahmen (15) und ein in die mindestens eine Dichtnut (9) eingelegtes Dichtelement (10) gebildet ist.

8. Zellrahmen (15) nach Anspruch 7, weiter **dadurch gekennzeichnet, dass** die Abdichtstruktur (4) eine um die Aufnahmeöffnung (1) umlaufende Aufnahmeöffnungs-Dichtnut (9a) und einen darin eingelegten Aufnahmeöffnungs-Dichtring beinhaltet.

9. Zellrahmen (15) nach Anspruch 7 oder 8, weiter **dadurch gekennzeichnet, dass** die Abdichtstruktur (4) eine um eine zugeordnete Sammelkanalöffnung (2) umlaufende Sammelkanal-Dichtnut (9b) und einen darin eingelegten Sammelkanal-Dichtring beinhaltet.

10. Zellrahmen (15) nach einem der Ansprüche 7 bis 9, weiter **dadurch gekennzeichnet, dass** die Abdichtstruktur (4) eine benachbart zu einem Zellrahmenaußenrand (11) umlaufende Zellrahmen-Dichtnut (9c) und einen darin eingelegten Zellrahmen-Dichtring beinhaltet.

11. Zellrahmen (15) nach einem der Ansprüche 7 bis 10, weiter **dadurch gekennzeichnet, dass** die Abdichtstruktur (4) mindestens eine Dichtelement-Haltenase (12) aufweist, die sich in die mindestens eine Dichtnut (9) hinein erstreckt.

12. Zellrahmen (15) nach einem der Ansprüche 1 bis 11, weiter **dadurch gekennzeichnet, dass** er rechteckförmig ist, in jedem seiner vier Eckbereiche (13a, 13b, 13c, 13d) je eine Sammelkanalöffnung (2a, 2b, 2c, 2d) aufweist und die Verteilerkanalstruktur (3) auf zwei entgegengesetzten Seitenbereichen (13e, 13f) ausgebildet ist.

13. Elektrolyseblock, insbesondere zur alkalischen Wasserelektrolyse, mit einem Blockstapelaufbau, der umfasst:
- eine Mehrzahl von gegeneinander anliegend gestapelten Zellrahmen (15) nach einem der Ansprüche 1 bis 12, wobei die Zellrahmen (15) alternierend um 180° um eine zur Zellrahmenebene (Ez) senkrechte Hochachse (Hz) gedreht gestapelt sind,
- eine Mehrzahl von Elektrolysemembranen (19), von denen jeweils eine in der Aufnahmeöffnung (1a) eines zugeordneten Zellrahmens (15) aufgenommen ist, und
- eine Mehrzahl von Bipolarplatten (20), von denen jeweils eine in der Aufnahmeöffnung (1a) eines zugeordneten Zellrahmens (15) aufgenommen ist,
- wobei die Elektrolysemembranen (19) und die Bipolarplatten (20) alternierend angeordnet sind und zugeordnete Arbeitselektroden (21, 22) dazwischen angeordnet sind.

14. Elektrolyseblock nach Anspruch 13, wobei
- an einer ersten Blockstirnseite (26) des Blockstapelaufbaus eine Medienzuführungs-Anschlusskonfiguration (27) und an einer der ersten entgegengesetzten zweiten Blockstirnseite (28) des Blockstapelaufbaus eine Medienabführungs-Anschlusskonfiguration (29) angeordnet ist und/oder
- wobei eine kathodische Elektrodenseite einer ersten Elektrolysezelle im Blockstapelaufbau und eine anodische Elektrodenseite einer letzten Elektrolysezelle im Blockstapelaufbau jeweils durch eine Isolierplatte (25) und eine Isolierhülse (18) elektrisch und medientechnisch von Endplatten (16a, 16b) des Blockstapelaufbaus getrennt sind und elektrische Anschlüsse einer ersten Kathode und einer letzten Anode des Blockstapelaufbaus elektrisch isoliert durch die entsprechende Isolierplatte (25) und die entsprechende Endplatte (16a, 16b) hindurchgeführt sind.

15. Elektrolyseblock nach Anspruch 14, wobei eine den Blockstapelaufbau umgehende Medienumlenkleitung (30) von der Medienzuführungs-Anschlusskonfiguration (27) an der ersten Blockstirnseite (26) zur zweiten Blockstirnseite (28) oder von der Medienabführungs-Anschlusskonfiguration (29) zur ersten Blockstirnseite (26) vorgesehen ist.

## Claims

1. Cell frame (15) for an electrolysis or fuel cell block, comprising
- an accommodation opening (1) configured for selective accommodating of an electrolysis or fuel cell membrane or of a plate impermeable to media,
- a plurality of collector duct openings (2) configured for media supply and media discharge through the cell frame (15),
- a distributor duct structure (3) configured for media supply from a respective supplying collector duct opening (2) to an associated half space (5) adjacent to the accommodation opening and for media discharge from said half space (5) to an associated discharging collector duct opening (2), and
- a sealing structure (4) configured for sealing the cell frame (15) to the exterior and/or the accommodation opening (1) and/or the collector duct openings (2),
**characterized in that**
- the distributor duct structure (3) is composed of a groove duct structure (6) formed only on a first main side (8a) of the cell frame (15) and a plurality of through bores (7) extending between the groove duct structure (6) and the associated half space (5) with a directional component parallel to a cell frame plane (Ez), and
- the sealing structure (4) is formed only on a second main side (8b) opposite to the first main side (8a) of the cell frame (15).

2. Cell frame (15) according to claim 1, further **characterized in that** the groove duct structure (6) with a collector duct-sided portion (6a) opens out into the associated collector duct opening (2), and the through bores (7) open out into a half space-sided portion (6b) of the groove duct structure (6) adjacent to the collector duct-sided portion (6a), wherein the half space-sided portion (6b) of the groove duct structure (6) is symmetrical to a transverse axis (Qz) of the cell frame (15) and/or symmetrical to a longitudinal axis (Lz) of the cell frame (15).

3. Cell frame (15) according to claim 1 or 2, further **characterized in that** the groove duct structure (6) has a meandering course and/or has a course branching out in a direction towards the through bores (7).

4. Cell frame (15) according to any one of claims 1 to 3, further **characterized in that** the through bores (7) are arranged offset towards the associated half space (5) in relation to a central plane of the cell frame (15) perpendicular to a vertical axis (Hz) of the cell frame (15) and/or open out into the groove duct structure (6) on a groove lateral wall (6c) of the groove duct structure (6) and adjacent to a groove bottom (6d) of the groove duct structure (6).

5. Cell frame (15) according to any one of claims 1 to 4, further **characterized in that** the through bores (7) are arranged uniformly distributed on an associated lateral edge portion of the half space (5).

6. Cell frame (15) according to any one of claims 1 to 5, further **characterized in that** the accommodation opening (1) is provided by a unilateral accommodation groove (1a) in the cell frame (15).

7. Cell frame (15) according to any one of claims 1 to 6, further **characterized in that** the sealing structure (4) is provided by at least one sealing groove (9) in the cell frame (15) and a sealing element (10) inserted into the at least one sealing groove (9).

8. Cell frame (15) according to claim 7, further **characterized in that** the sealing structure (4) includes an accommodation opening sealing groove (9a) encircling the accommodation opening (1) and an accommodation opening sealing ring inserted therein.

9. Cell frame (15) according to claim 7 or 8, further **characterized in that** the sealing structure (4) includes a collector duct sealing groove (9b) encircling an associated collector duct opening (2) and a collector duct sealing ring inserted therein.

10. Cell frame (15) according to any one of claims 7 to 9, further **characterized in that** the sealing structure (4) includes a cell frame sealing groove (9c) encircling adjacent to a cell frame outer edge (11) and a cell frame sealing ring inserted therein.

11. Cell frame (15) according to any one of claims 7 to 10, further **characterized in that** the sealing structure (4) has at least one sealing element retaining lug (12) extending into the at least one sealing groove (9).

12. Cell frame (15) according to any one of claims 1 to 11, further **characterized in that** said cell frame is rectangular in shape, has a respective collector duct opening (2a, 2b, 2c, 2d) in each of its four corner regions (13a, 13b, 13c, 13d) and the distributor duct structure (3) is formed on two opposite lateral regions (13e, 13f).

13. Electrolysis block, preferably for alkaline water electrolysis, having a block stack formation, comprising:
- a plurality of stacked cell frames (15) resting against each other according to any one of claims 1 to 12, wherein the cell frames (15) are stacked alternatingly turned by 180° about a vertical axis (Hz) perpendicular to the cell frame plane (Ez),
- a plurality of electrolysis membranes (19) with in each case a respective one being accommodated in the accommodation opening (1a) of an associated cell frame (15), and
- a plurality of bipolar plates (20) with in each case a respective one being accommodated in the accommodation opening (1a) of an associated cell frame (15),
- wherein the electrolysis membranes (19) and the bipolar plates (20) are arranged in an alternating pattern and associated working electrodes (21, 22) are arranged there between.

14. Electrolysis block according to claim 13, wherein
- on a first block end side (26) of the block stack formation a media supply connector configuration (27) and on a second block end side (28) of the block stack formation opposite to the first one a media discharge connector configuration (29) is disposed, and/or
- wherein a cathodic electrode side of a first electrolysis cell in the block stack formation and an anodic electrode side of a last electrolysis cell in the block stack formation are each separated by an insulating plate (25) and an insulating sleeve (18) electrically and medially from end plates (16a, 16b) of the block stack formation and electrical connections of a first cathode and a last anode of the block stack formation have a feedthrough electrically insulated by the corresponding insulating plate (25) and the corresponding end plate (16a, 16b).

15. Electrolysis block according to claim 14, wherein a media redirection line (30) bypassing the block stack formation is provided from the media supply connection configuration (27) on the first block end side (26) to the second block end side (28), or from the media discharge connection configuration (29) to the first block end side (26).

## Revendications

1. Cadre de cellule (15) pour un bloc d'électrolyse ou un bloc de pile à combustible, comprenant
- une ouverture de logement (1) configurée pour le logement sélectif d'une membrane d'électrolyse ou d'une membrane de pile à combustible ou d'une plaque imperméable au média,
- une pluralité d'ouvertures de conduit collecteur (2) configurées pour l'alimentation de média et décharge de média à travers le cadre de cellule (15),
- une structure de conduit distributeur (3) configurée pour l'alimentation de média d'une ouverture de conduit collecteur (2) alimentant respective à un demi-espace (5) associé adjacent à l'ouverture de logement et pour décharge de média de cet demi-espace (5) vers une ouverture de conduit collecteur (2) déchargeant associée, et
- une structure d'étanchéité (4) configurée pour l'étanchement du cadre de cellule (15) vers l'extérieur et/ou de l'ouverture de logement (1) et/ou des ouvertures de conduit collecteur (2),
**caractérisé en ce que**
- la structure de conduit distributeur (3) se compose d'une structure de conduit de rainure (6) formée seulement sur un premier côté principal (8a) du cadre de cellule (15) et une pluralité de trous traversants (7) s'étendant entre la structure de conduit de rainure (6) et le demi-espace (5) associé avec une composante directionnelle parallèle à un plan de cadre de cellule (Ez) et
- la structure d'étanchéité (4) est agencée seulement sur un deuxième côté principal (8b) du cadre de cellule (15) opposé au premier côté principal (8a).

2. Cadre de cellule (15) selon la revendication 1, en outre **caractérisé en ce que** la structure de conduit de rainure (6) se dégorge dans l'ouverture de conduit collecteur (2) associée par une section (6a) côté conduit collecteur et les trous traversants (7) se dégorgent dans une section (6b) côté demi-espace de la structure de conduit de rainure (6) adjacent à la section (6a) côté conduit collecteur, dans lequel la section (6b) côté demi-espace de la structure de conduit de rainure (6) est symétrique par rapport à un axe transversal (Qz) du cadre de cellule (15) et/ou symétrique par rapport à un axe longitudinal (Lz) du cadre de cellule (15).

3. Cadre de cellule (15) selon la revendication 1 ou 2, en outre **caractérisé en ce que** la structure de conduit de rainure (6) est configurée sous forme de méandres et/ou sous forme de ramification vers la direction des trous traversants (7).

4. Cadre de cellule (15) selon l'une quelconque des revendications 1 à 3, en outre **caractérisé en ce que** les trous traversants (7) sont placés décalés vers le demi-espace (5) associé par rapport à un plan central du cadre de cellule (15) perpendiculaire à un axe vertical (Hz) du cadre de cellule (15) et/ou se dégorgent dans la structure de conduit de rainure (6) sur une paroi latérale de rainure (6c) de la structure de conduit de rainure (6) et adjacent à un fond de rainure (6d) de la structure de conduit de rainure (6).

5. Cadre de cellule (15) selon l'une quelconque des revendications 1 à 4, en outre **caractérisé en ce que** les trous traversants (7) sont répartis uniformément sur une section de bord latérale associée du demi-espace (5).

6. Cadre de cellule (15) selon l'une quelconque des revendications 1 à 5, en outre **caractérisé en ce que** l'ouverture de logement (1) est constituée par une rainure de logement (1a) unilatérale dans le cadre de cellule (15).

7. Cadre de cellule (15) selon l'une quelconque des revendications 1 à 6, en outre **caractérisé en ce que** la structure d'étanchéité (4) est constituée par au moins une rainure d'étanchéité (9) dans le cadre de cellule (15) et un élément d'étanchéité (10) inséré dans la au moins une rainure d'étanchéité (9).

8. Cadre de cellule (15) selon la revendication 7, en outre **caractérisé en ce que** la structure d'étanchéité (4) se compose d'une rainure d'étanchéité de l'ouverture de logement (9a) encerclant l'ouverture de logement (1) et une bague d'étanchéité de l'ouverture de logement insérée là-dedans.

9. Cadre de cellule (15) selon la revendication 7 ou 8, en outre **caractérisé en ce que** la structure d'étanchéité (4) se compose d'une rainure d'étanchéité du conduit collecteur (9b) encerclant une ouverture de conduit collecteur (2) associée et une bague d'étanchéité du conduit collecteur insérée là-dedans.

10. Cadre de cellule (15) selon l'une quelconque des revendications 7 à 9, en outre **caractérisé en ce que** la structure d'étanchéité (4) se compose d'une rainure d'étanchéité du cadre de cellule (9c) encerclant adjacent à un bord extérieur du cadre de cellule (11) et une bague d'étanchéité du cadre de cellule insérée là-dedans.

11. Cadre de cellule (15) selon l'une quelconque des revendications 7 à 10, en outre **caractérisé en ce que** la structure d'étanchéité (4) présente au moins un ergot de retenue de l'élément d'étanchéité (12) qui s'étend dans la au moins une rainure d'étanchéité (9).

12. Cadre de cellule (15) selon l'une quelconque des revendications 1 à 11, en outre **caractérisé en ce que** ledit cadre est sous forme rectangulaire, présente dans chacune de ses quatre parties de coin (13a, 13b, 13c, 13d) une ouverture de conduit collecteur (2a, 2b, 2c, 2d) respective et la structure de conduit distributeur (3) est agencée sur deux zones latérales (13e, 13f) opposées.

13. Bloc d'électrolyse, en particulier pour électrolyse de l'eau alcaline, avec une construction d'empilement de blocs, comprenant :
- une pluralité de cadres de cellule (15) empilés restant l'un contre l'autre selon l'une quelconque des revendications 1 à 12, dans lequel les cadres de cellule (15) sont empilés sous forme tournée en alternance de 180° autour d'un axe vertical (Hz) perpendiculaire au plan de cadre de cellule (Ez),
- une pluralité de membranes d'électrolyse (19), une membrane respective étant logée dans l'ouverture de logement (1a) d'un cadre de cellule (15) associé, et
- une pluralité de plaques bipolaires (20), une plaque respective étant logée dans l'ouverture de logement (1a) d'un cadre de cellule (15) associé,
- dans lequel les membranes d'électrolyse (19) et les plaques bipolaires (20) sont agencées en alternance et électrodes de travail (21, 22) associées sont placées entre celles-ci.

14. Bloc d'électrolyse selon la revendication 13, dans lequel
- sur une première face frontale de bloc (26) de la construction d'empilement de blocs une configuration de raccordement d'alimentation de média (27) et sur une deuxième face frontale de bloc (28) de la construction d'empilement de blocs une configuration de raccordement de décharge de média (29) est agencée et/ou
- dans lequel un côté d'électrode cathodique d'une première cellule d'électrolyse dans la construction d'empilement de blocs et un côté d'électrode anodique d'une ultime cellule d'électrolyse dans la construction d'empilement de blocs sont respectivement séparés par une plaque isolante (25) et un manchon isolant (18) électriquement et média-lement de plaques terminales (16a, 16b) de la construction d'empilement de blocs et raccordements électriques d'une première cathode et d'une ultime anode de la construction d'empilement de blocs sont électriquement isolées passées à travers la plaque isolante (25) correspondante et la plaque terminale (16a, 16b) correspondante.

15. Bloc d'électrolyse selon la revendication 14, dans lequel une conduite de détournement de média (30) contournant la construction d'empilement de blocs est prévue de la configuration de raccordement d'alimentation de média (27) sur la première face frontale de bloc (26) à la deuxième face frontale de bloc (28) ou de la configuration de raccordement de décharge de média (29) à la première face frontale de bloc (26).
